# EUROPÄISCHE PATENTANMELDUNG

(11) **EP 2 489 990 A1**
(43) Veröffentlichungstag der Anmeldung: **22.08.2012**
(21) Anmeldenummer: 11154564.6
(22) Anmeldetag: 15.02.2011
(51) Int. Cl.: G01D 7/08, B60L 11/18

(54) **Anzeigevorrichtung für ein Elektrofahrzeug**

(71) Anmelder: Brusa Elektronik AG, 9466 Sennwald (CH)
(72) Erfinder: Brusa, Josef, 9473, Gams (CH)
(74) Vertreter: Patentbüro Paul Rosenich AG

(57) **Zusammenfassung**

Die Erfindung betrifft eine Anzeigevorrichtung für ein Elektrofahrzeug (19), umfassend:
- ein Anzeigefeld (3)
- eine Verarbeitungseinrichtung (12) zur Ansteuerung des Anzeigefeldes (3), wobei die Verarbeitungseinrichtung (12) ausgebildet ist, um den aktuellen Ladezustand der Batterie zu ermitteln und dem Anzeigefeld (3) bereitzustellen,
wobei der aktuelle Ladezustand auf dem Anzeigefeld (3) durch ein erstes graphisches Anzeigeelement (1) darstellbar ist.

Für ein intuitives Erfassen der Informationen ist die Verarbeitungseinrichtung (12) ausgebildet, um in Abhängigkeit mindestens eines Fahrparameters, mindestens einen, zukünftig zu erwartenden Ladezustand zu ermitteln und dem Anzeigefeld (3) zur visuellen Darstellung bereitzustellen, und ist der zukünftige Ladezustand auf dem Anzeigefeld (3) als zweites graphisches Element (2) darstellbar, wobei die Positions-, Ausrichtungs-, Form- oder Größenkoordinaten des ersten graphischen Elementes (1) und des zweiten graphischen Elementes (2) auf dem Anzeigefeld (3) derart relativ zueinander festgelegt sind, dass das zweite graphische Element (2) jene Position, Ausrichtung, Form oder Größe des ersten graphischen Elementes (1), die dem zukünftigen Ladezustand entspricht, anzeigt oder zumindest andeutet.

## Beschreibung

Die Erfindung bezieht sich auf eine Anzeigevorrichtung für ein mit einer Batterie betriebenes Elektrofahrzeug zur visuellen Darstellung des Ladezustandes der Batterie, umfassend:
- ein Anzeigefeld für den Fahrzeuglenker, und
- eine mit dem Anzeigefeld verbundene Verarbeitungseinrichtung zur Ansteuerung des Anzeigefeldes,
wobei die Verarbeitungseinrichtung ausgebildet ist, um den aktuellen Ladezustand der Batterie zu ermitteln und dem Anzeigefeld zur visuellen Darstellung bereitzustellen,
wobei der aktuelle Ladezustand der Batterie auf dem Anzeigefeld durch ein erstes graphisches Anzeigeelement darstellbar ist und eine Änderung der Position, Ausrichtung, Form oder Größe des ersten graphischen Anzeigeelementes mit einer Änderung des Ladezustandes der Batterie korreliert. Die Erfindung bezieht sich auch auf ein Elektrofahrzeug und ein Verfahren zum Betrieb einer Anzeigevorrichtung.

Im Stand der Technik sind Bordcomputer bzw. Anzeigesysteme bekannt, die insbesondere bei Elektrofahrzeugen Statusinformationen, wie z.B. Ladezustand der Batterie, Restkilometer, Restfahrzeit, Ladedauer, etc. anzeigen, gegebenenfalls unter Berücksichtigung eines vom Fahrer einzugebenden Parameters, wie z.B. Geschwindigkeit, aktuelle Fahrverhältnisse, Steigungen, etc., der bei der Berechnung der obigen Statusinformation miteinbezogen wird.

Die US 5,487,002 A offenbart ein Energiemanagementsystem, das dem Fahrer eines Fahrzeuges ermöglicht, nach Eingabe von Parametern bzw. Fahrprofilen Statusinformationen, z.B. über die Reichweite, zu erhalten. Dazu sind ein menü-gesteuertes Display und interaktive Auswahltasten vorgesehen. Auch beim Ladevorgang können vom Fahrer Parameter, hier die gewünschte Ladezeit, eingegeben werden. In Abhängigkeit von der eingegebenen Ladezeit werden unterschiedliche Ladealgorithmen angewendet, um eine optimale Ladung zu erreichen.

Die DE 10 2008 040 308 A1 offenbart ein Verfahren einer elektronischen Steuerung in einem Kraftfahrzeug, insbesondere mit einem Hybridantrieb und mit einem elektrischen Energiespeicher. Dabei wird der aktuelle Ladezustand des Energiespeichers laufend abgefragt und innerhalb eines minimalen und maximalen Ladezustands eingeordnet. Die abgefragten Informationen über den Ladezustand werden an einer Anzeigevorrichtung für den Fahrer ausgegeben.

Zusätzlich wird eine benötigte Restenergiemenge bis zum Erreichen mindestens eines zulässigen Soll-Extremwertes des Ladezustandes des Energiespeichers berechnet. Diese Information wird als Restzeit und/oder als Restkilometer berechnet und dem Fahrer in der Anzeigevorrichtung angezeigt.

### Die Internetseite

http://www.pappas.at/personenwagen/aktuelles/news/detail/?id=Mercedes-Benz-F800-Style
berichtet von einer Funktion "Range on Map". Das System stellt den verfügbaren Aktionsradius bei elektrischer Fahrt als 360°-Ansicht auf einer Landkarte dar. Falls Stadtverwaltungen in Zukunft nur noch rein elektrischen Autoverkehr zulassen sollten, kann der Fahrer mithilfe der "Range on Map" Funktion ermitteln, ob die elektrische Reichweite seines Fahrzeugs für die Ein- und Ausfahrt im Stadtgebiet ausreicht. Dazu kombiniert das System Informationen über den aktuellen Batterie-Ladezustand mit Daten des Navigationssystems.

Ein Web-basiertes Tool, das ebenfalls unter Zuhilfenahme von Karten funktioniert und unter dem Namen CARtography bekannt ist, wird auf der Internetseite http://www.virve.ch/cartograpgy/ vorgestellt.

Die DE 3142038 A1 offenbart ein Verfahren zur Ermittlung einer restlichen Fahrreichweite eines Elektrofahrzeuges. Dabei werden systeminterne Parameter, wie Ströme, Spannungen, Leistungen, Kennlinien, etc. herangezogen und verarbeitet.

Die DE 69204811 T2 offenbart eine Restreichweiten-Anzeigevorrichtung für ein batteriebetriebenes Elektrofahrzeug. Die Restreichweite wird dabei unter Berücksichtigung des Ladungsverbrauches in Abhängigkeit von der gefahrenen Entfernung und der Art der Straße und weiterer physikalischer Parameter berechnet.

### Die Internetseite

http://www.arcor.de/content/auto/aktuell/news/audi/79930454,1,artikel,Audi+e -tron+Spyder+Mit+Diesel-+und+Elektromotor.html?cp=25
zeigt ein Fahrzeugdisplay, das über den Ladezustand der Batterien und die aktuelle Reichweite informiert.

Ein allen oben beschriebenen Anzeigesystemen anhaftender Nachteil besteht darin, dass mehrere unterschiedliche Informationen für den Fahrzeuglenker zur Verfügung gestellt werden, ohne dass zwischen den einzelnen Informationen ein erkennbarer Bezug hergestellt wird. Der Fahrzeuglenker ist gefordert, sich aus den dargestellten Daten seines Fahrzeuges jene Information zu extrahieren, die für seine Fahrweise und Fahrplanung tatsächlich relevant ist. Dies gelingt dem Fahrer bei den herkömmlichen Anzeigesystemen jedoch nicht in ausreichendem Maße, da er sich während der Fahrt insbesondere auf den Verkehr konzentrieren muss. Er wird daher - bereits aufgrund mangelnder Information - seine Fahrweise nicht optimal auf den aktuellen Fahrzeugstatus anpassen und auch keine zeitlich und örtlich optimierten Ladestopps einplanen können. Ein weiterer Nachteil ist darin zu sehen, dass die Darstellung der Informationen gemäß dem Stand der Technik den Fahrer ablenken und auf diese Weise gefährliche Situationen heraufbeschwören kann. Außerdem erfordert das Darstellen mehrerer unzusammenhängender Informationen auf einer Anzeigevorrichtung bzw. einem Display entsprechend viel Platz, der jedoch gerade im Cockpit eines Fahrzeuges nicht uneingeschränkt zur Verfügung steht.

Das Ziel der vorliegenden Erfindung besteht darin, diese Nachteile zu beseitigen und eine Anzeigevorrichtung bereitzustellen, aus der der Fahrzeuglenker intuitiv und bereits auf den ersten Blick jene Information erfassen kann, die für ihn tatsächlich interessant und erforderlich ist, um seinen Fahrstil zu optimieren bzw. auf bestmögliche Energieersparnis anzupassen und notwendige Stopps zum Aufladen der Fahrzeugbatterie rechtzeitig einzuplanen oder gegebenenfalls durch effizientes Fahren hinauszuzögern.

Die Anzeigevorrichtung soll keine Ablenkung für den Fahrer bieten, ihm jedoch zu jedem Zeitpunkt zuverlässige und eindeutige Informationen liefern können. Außerdem soll durch eine kompakte Darstellung der Platzbedarf der Anzeigevorrichtung minimiert werden, so dass trotz enger Platzverhältnisse im Cockpit die dargestellten Informationen für den Fahrzeuglenker ständig sichtbar sein können und nicht erst durch Betätigung eines Knopfes durch den Fahrzeuglenker eingeblendet werden müssen.

Diese Ziele werden mit einer eingangs erwähnten Anzeigevorrichtung dadurch gelöst, dass die Verarbeitungseinrichtung ausgebildet ist, um in Abhängigkeit mindestens eines Fahrparameters, insbesondere der aktuellen Leistung des Elektrofahrzeuges oder eines vom Fahrzeuglenker eingegebenen Fahrprofils, mindestens einen, zukünftig zu erwartenden Ladezustand der Batterie, insbesondere nach einem oder mehreren Zeitoder Distanzintervallen, zu ermitteln und dem Anzeigefeld zur visuellen Darstellung bereitzustellen, und dass der zukünftige Ladezustand der Batterie auf dem Anzeigefeld als zweites graphisches Element darstellbar ist, wobei die Positions-, Ausrichtungs-, Form- oder Größenkoordinaten des ersten graphischen Elementes und des zweiten graphischen Elementes auf dem Anzeigefeld derart relativ zueinander festgelegt sind, dass das zweite graphische Element jene Position, Ausrichtung, Form oder Größe des ersten graphischen Elementes, die dem zukünftigen Ladezustand der Batterie entspricht, anzeigt oder zumindest andeutet.

Durch diese Maßnahme, bei der ein erstes grafisches Anzeigeelement mit einem zweiten grafischen Anzeigeelement optisch sichtbar in Beziehung gebracht wird, kann der Fahrer unmittelbar erkennen, wie der Ladezustand seiner Batterie aussieht (und zwar zum aktuellen Zeitpunkt, wie auch zu in der Zukunft liegenden Zeitpunkten) und vor allem wie lange oder wie weit er damit noch fahren kann. Je nach Ausbildung des zweiten graphischen Anzeigeelementes kann er aus diesem erkennen, zu welchem Zeitpunkt in der Zukunft die Batterie welchen Ladezustand annehmen wird. Die Berechnung dieser Information erfolgt vorzugsweise in Abhängigkeit der aktuellen Leistung des Elektrofahrzeuges, die von der Verarbeitungseinrichtung (z.B. über Sensoren) ausgelesen wird. Die aktuelle Leistung kann sich auf die Leistung des Fahrmotors beziehen, oder auch Leistungen anderer Verbraucher, wie zum Beispiel einer Heizung, Klimaanlage, Lichter, Radio, Kommunikationssysteme, etc. beinhalten.

Insbesondere ist vorteilhaft, dass mit dem zweiten graphischen Element zukünftige Ladezustände der Batterie anzeigbar oder zumindest andeutbar sind, wobei der zukünftige Ladezustand nach einem oder mehreren definierten Zeit- oder Distanzintervallen, die als solche auch dem Fahrer bekannt sind oder die er gleichzeitig mit angezeigt bekommt, ersichtlich ist.

Aufgrund dieses einfach zu erfassenden Anzeigesystems und der ins Auge springenden Information kann sich der Fahrer auf den Verkehr konzentrieren und muss keine ablenkenden Überlegungen anstellen, wie lange er mit seinem Fahrzeug noch fahren kann oder wie weit er nun mit seinem Fahrzeug kommt.

Eine bevorzugte Ausführung der Erfindung ist dadurch gekennzeichnet, dass die Verarbeitungseinrichtung ausgebildet ist, um mehrere zukünftig zu erwartende Ladezustände der Batterie nach verschiedenen, vorzugsweise äquidistanten Zeit- oder Distanzintervallen zu ermitteln und dem Anzeigefeld zur visuellen Darstellung bereitzustellen, wobei das zweite graphische Anzeigeelement jene Positionen, Formen oder Größen des ersten graphischen Elementes, die den zukünftigen Ladezuständen der Batterie entsprechen, gleichzeitig anzeigt oder zumindest andeutet.

Entsprechend der Ausgestaltung und Unterteilung des zweiten Anzeigeelementes kann dieses gleich mehrere zukünftige Ladezustände anzeigen, sodass der Fahrer die sukzessive Entwicklung des Batterieladestatus gegebenenfalls bis hin zur vollständig entladenen Batterie vor Augen hat. Die zukünftigen Ladezustände entsprechen dabei einem vordefinierten Zeit- oder Distanzintervall.

Eine besonders bevorzugte Ausführung der Erfindung ist dadurch gekennzeichnet, dass das erste graphische Anzeigeelement und das zweite graphische Anzeigeelement auf dem Anzeigefeld gleichzeitig darstellbar sind. Dies ermöglicht dem Fahrer das problemlose Erfassen mehrerer Informationen, ohne durch zusätzliche Betätigung eines Bedienelementes zwischen mehreren Informationsanzeigen umschalten zu müssen.

Eine bevorzugte Ausführung der Erfindung ist dadurch gekennzeichnet, dass die Verarbeitungseinrichtung und das Anzeigefeld derart ausgebildet sind, dass die bei einer Änderung des Ladezustandes der Batterie veränderlichen Koordinaten des ersten graphischen Anzeigeelementes auf dem Anzeigefeld bei jedem Ladezustand der Batterie als Bezugspunkt für die Position bzw. Ausrichtung des zweiten graphischen Anzeigeelementes auf dem Anzeigefeld dienen. Dies bietet eine dynamische Anzeige, die unabhängig vom Batterieladestatus die Vorzüge der erfindungsgemäßen Lösung zur Geltung bringt. Insbesondere bleiben die Informationen in einem ständigen Bezug zueinander, was das Erfassen für den Fahrer stark erleichtert. Dabei kann sich die absolute Lage des zweiten Anzeigeelementes mit einer Änderung des Ladezustandes ständig verändern.

Eine bevorzugte Ausführung der Erfindung ist dadurch gekennzeichnet, dass die bei einer Änderung des Ladezustandes der Batterie veränderlichen Randkoordinaten des ersten graphischen Anzeigeelementes mit den Randkoordinaten des zweiten graphischen Anzeigeelementes zusammenfallen. Diese räumliche Nähe wirkt sich besonders vorteilhaft für das Erfassen durch das menschliche Auge aus. Gleichzeitig wird dadurch ein Anzeigefeld mit minimalem Platzbedarf geschaffen.

Eine bevorzugte Ausführung der Erfindung ist dadurch gekennzeichnet, dass die Verarbeitungseinrichtung das Anzeigefeld derart ansteuert, dass das erste graphische Anzeigeelement und das zweite graphische Anzeigeelement und/oder der Anzeigebereich des ersten Anzeigeelementes und der Anzeigebereich des zweiten Anzeigeelementes auf dem Anzeigefeld zumindest teilweise überlappen. Diese Maßnahme bewirkt eine weitere räumliche Konzentration der dargestellten Informationen, wodurch die Informationsdichte am Fahrzeugdisplay weiter erhöht werden kann.

Eine bevorzugte Ausführung der Erfindung ist dadurch gekennzeichnet, dass zumindest eines der graphischen Anzeigeelemente ein in seiner Länge veränderlicher Balken ist, oder dass zumindest ein graphisches Anzeigeelement als Kreissegment oder als um einen Bezugspunkt drehbarer Pfeil ausgebildet ist, oder dass zumindest ein graphisches Anzeigeelement aus einer Aneinanderreihung mehrerer Teilelemente besteht. Diese Varianten zeigen die Vielfalt an Formen, die die Anzeigeelemente annehmen können.

Eine bevorzugte Ausführung der Erfindung ist dadurch gekennzeichnet, dass das zweite graphische Anzeigeelement ein aus mehreren Strichen oder Pfeilen bestehendes Muster ist, wobei die Striche oder Pfeile die Positionen, Ausrichtungen, Formen oder Größen des ersten graphischen Anzeigeelementes, die den zukünftigen Ladezuständen der Batterie entsprechen, anzeigen oder zumindest andeuten.

Die Striche oder Pfeile entsprechen vorgegebenen Zeit- und/oder Distanzintervallen, die wiederum im Zusammenspiel mit dem ersten Anzeigeelement die zu entsprechenden Zeitpunkten zu erwartenden Ladezustände der Batterie wiedergeben. Z.B. kann für jede Stunde eine Markierung vorgesehen sein. Hier können lineare oder kreisförmige Skalierungen verwendet werden.

Eine bevorzugte Ausführung der Erfindung ist dadurch gekennzeichnet, dass die Verarbeitungseinrichtung ausgebildet ist, um die aktuelle Leistung eines gegebenenfalls zugeschalteten Range Extenders des Elektrofahrzeuges zu ermitteln und bei der Ermittlung des zukünftig zu erwartenden Ladezustandes der Batterie miteinzubeziehen. Durch diese Berechnung können die angezeigten Informationen verfeinert und der Realität näherkommend angepasst werden.

Eine bevorzugte Ausführung der Erfindung ist dadurch gekennzeichnet, dass die Verarbeitungseinrichtung ausgebildet ist, um die aktuelle Ladeleistung eines gegebenenfalls angeschlossenen Ladegerätes zu ermitteln und bei der Ermittlung des zukünftig zu erwartenden Ladezustandes der Batterie miteinzubeziehen. Daraus kann gleichzeitig ersehen werden, wie lange es braucht, um eine Batterie bis zu einem vorgegebenen Status aufzuladen bzw. welchen Status die Batterie in einer, zwei, drei, etc. Stunden aufweisen wird.

Eine bevorzugte Ausführung der Erfindung ist dadurch gekennzeichnet, dass die Verarbeitungseinrichtung ausgebildet ist, um die aktuelle Leistung eines gegebenenfalls zugeschalteten Range Extenders des Elektrofahrzeuges und die aktuelle Leistung des Elektrofahrzeuges einem Anzeigefeld zur visuellen Darstellung bereitzustellen, wobei die derart ermittelten Leistungen auf dem Anzeigefeld durch weitere graphische Anzeigeelemente darstellbar sind, die vorzugsweise derselben Skalierung unterliegen. Die derart in Beziehung gesetzten Informationen ermöglichen es dem Fahrer zu erkennen, wie stark der Range Extender bei einer bestimmten Fahrleistung benötigt wird. Er kann dadurch seine Fahrgeschwindigkeit entsprechend anpassen, um möglichst energiesparend zu fahren.

Eine bevorzugte Ausführung der Erfindung ist dadurch gekennzeichnet, dass die Verarbeitungseinrichtung ausgebildet ist, um in Abhängigkeit des Ladezustandes der Batterie einen Leistungsbereich des Elektrofahrzeuges zu ermitteln, in dem der Range Extender nicht zugeschaltet wird, und dem Anzeigefeld zur visuellen Darstellung zu übermitteln, wobei der Leistungsbereich auf dem Anzeigefeld durch ein graphisches Anzeigeelement darstellbar ist, das derselben Skalierung unterliegt wie die graphischen Anzeigeelemente, die die Leistungen des Range Extenders und des Elektrofahrzeuges darstellen. Die Darstellung des Leistungsbereiches erlauben es dem Fahrer vorherzusagen, bei welcher Leistung der Range Extender dazu geschaltet wird. Er kann dies verhindern, indem er unterhalb dieser Leistungsgrenze bleibt.

Eine bevorzugte Ausführung der Erfindung ist dadurch gekennzeichnet, dass die Verarbeitungseinrichtung ausgebildet ist, um die aktuelle Geschwindigkeit des Elektrofahrzeuges und den aktuellen Ladezustand der Batterie in einem gemeinsamen Anzeigefeld zur visuellen Darstellung bereitzustellen, und dass das Anzeigefeld derart konfiguriert ist, dass sich ein graphisches Anzeigeelement für die Geschwindigkeit und ein graphisches Anzeigeelement für den Ladezustand der Batterie entlang derselben Skalierung ändern. Die Verknüpfung dieser beiden Größen ermöglicht eine grobe Abschätzung welche Geschwindigkeit bei welchem Ladezustand noch sinnvoll erscheint. Insbesondere bei kurz vor der Entladung stehenden Batterien kann der Fahrer aufgrund der dargebotenen Information die Geschwindigkeit drosseln.

Die Erfindung umfasst ebenfalls ein Elektrofahrzeug mit einer Batterie und gegebenenfalls mit einem Range Extender zum Aufladen der Batterie während der Fahrt und mit einer Anzeigevorrichtung zur visuellen Darstellung des Ladezustandes der Batterie, wobei eine erfindungsgemäße Anzeigevorrichtung zur Anwendung kommt.

Ein Verfahren zum Betrieb einer Anzeigevorrichtung in einem mit einer Batterie betriebenen Elektrofahrzeug zur visuellen Darstellung des Ladezustandes der Batterie ist ebenfalls Teil der Erfindung.

Die Bezugszeichenliste ist Bestandteil der Offenbarung.

Anhand von Figuren wird die Erfindung symbolisch und beispielhaft näher erläutert. Die Figuren werden zusammenhängend und übergreifend beschrieben. Gleiche Bezugszeichen bedeuten gleiche Bauteile.

### Es zeigen dabei

die Fig. 1 schematisch die Komponenten eines Elektrofahrzeuges,
die Fig. 2 bis 5 ein Anzeigefeld mit graphischen Anzeigeelementen bei verschiedenen aktuellen Leistungen des Elektrofahrzeuges,
die Fig. 6 bis 8 ein Anzeigefeld mit graphischen Anzeigeelementen bei verschiedenen Ladezuständen der Batterie,
die Fig. 9 eine alternative Ausgestaltung des zweiten graphischen Anzeigeelementes,
die Fig. 10 ein Display mit mehreren Anzeigefeldern.

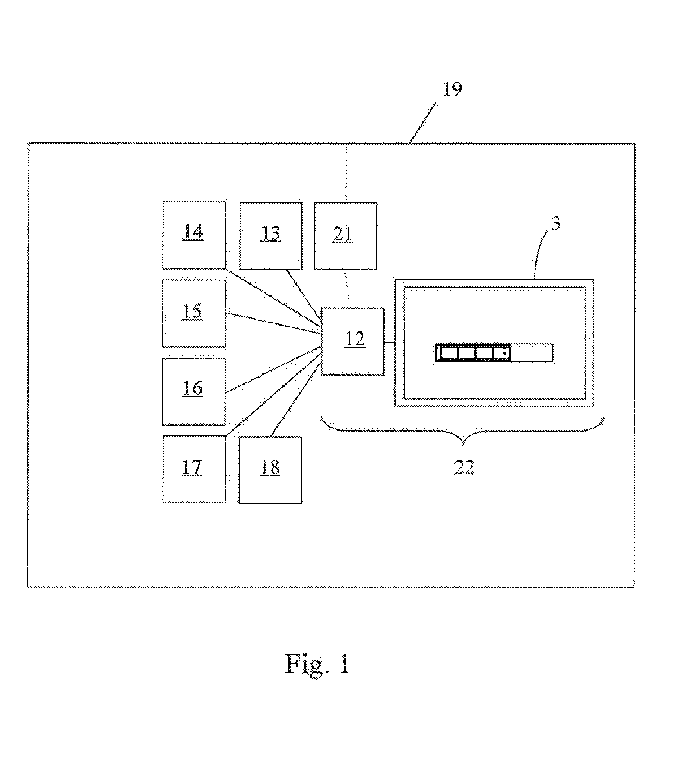

Das in Fig. 1 dargestellte Rechteck mit den darin enthaltenen Komponenten deutet in schematischer Weise ein Elektrofahrzeug 19 an. Dieses umfasst neben einer erfindungsgemäßen Anzeigevorrichtung 22 eine Batterie 13, einen Range Extender 14, einen Fahrmotor 15 zum Antrieb des Elektrofahrzeuges 19, eine Heizung 16, ein Licht 17 und ein Radio 18. Weitere Verbraucher können selbstverständlich ebenfalls vorgesehen sein. Ein im Elektrofahrzeug 19 bereits integriertes Ladegerät 21 wird beim Ladevorgang mit einer externen Stromversorgung verbunden. Während der Fahrt kann die Batterie 13 durch den Range Extender 14 (auch Reichweitenverlängerer genannt) geladen werden.

Ein Range Extender ist ein zusätzliches Aggregat in einem Elektrofahrzeug, das die Reichweite des Fahrzeugs erhöht - zusätzlich zu der mit der anfänglich in der Batterie gespeicherten Ladungsenergie erreichbaren Reichweite. Die am meisten eingesetzten Range Extender sind Verbrennungsmotoren, die einen Generator antreiben, der wiederum den Akkumulator und Elektromotor mit elektrischer Energie versorgt.

Die Anzeigevorrichtung 22 umfasst eine Verarbeitungseinrichtung 12 und ein Anzeigefeld 3 zur Visualisierung des Ladezustandes der Batterie 13. Das Anzeigefeld 3 kann als gesondertes Display ausgebildet sein oder als auf einem Bildschirm oder einem größeren Display vorgesehener Bereich mit definierten Randkoordinaten. Die Skalierung, z.B. in Form von Absolutwerten oder Prozent-Angaben, kann im Anzeigefeld 3 selbst enthalten sein oder außerhalb des Anzeigefeldes bzw. Displays fix vorhanden sein.

Die in Fig. 1 dargestellten Komponenten sind mit einer Verarbeitungseinrichtung 12 der Anzeigevorrichtung 22 verbunden, so dass ein Datenaustausch erfolgen kann. Die Verarbeitungseinrichtung 12 kann somit die aktuellen Statusinformationen der einzelnen Komponenten ermitteln, zueinander in Verbindung setzen, verarbeiten und zur Darstellung an das Anzeigefeld 3 übermitteln.

Die Verarbeitungseinrichtung 12 ist dabei derart konfiguriert, dass sie laufend den aktuellen Ladezustand der Batterie 13 ermittelt - z.B. als absolute Größe in der Einheit eines Maßes für den Ladezustand oder als relative Größe, insbesondere als Prozentangabe bezogen auf die Vollladung - und dem Anzeigefeld 3 bereitstellt, auf dem dann der Ladezustand in Form eines ersten grafischen Anzeigeelementes 1 darstellbar ist.

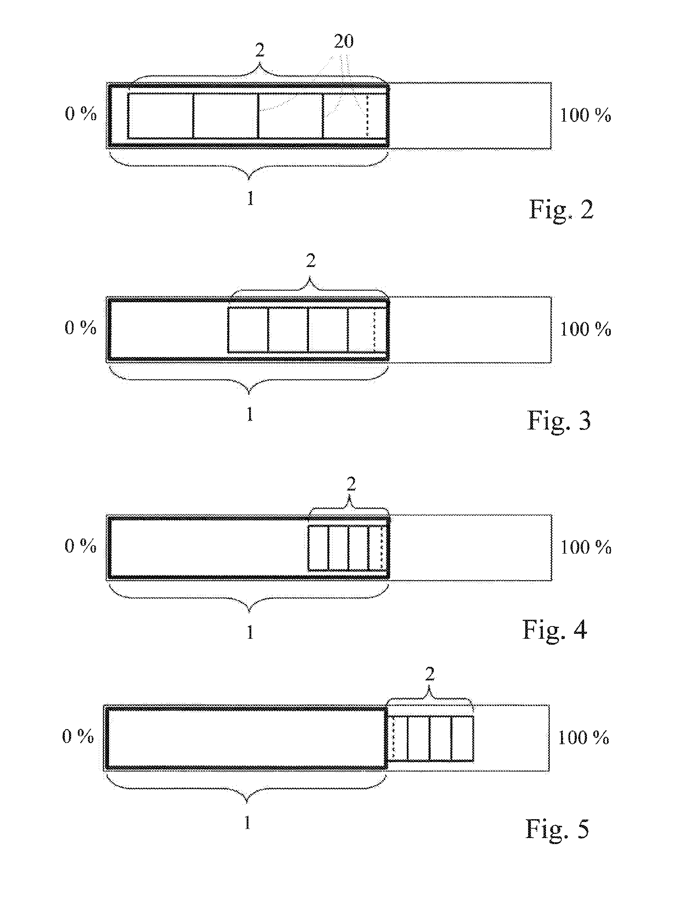

Im Ausführungsbeispiel der Figur 2 hat das erste grafische Anzeigeelement 1 die Form eines in seiner Länge veränderlichen Balkens, dessen Größe zwischen zwei Endmarken variieren kann. Im vorliegenden Beispiel wird der Ladezustand der Batterie 13 in Form einer Prozentangabe zwischen 0 % und 100 % visualisiert.

Die Verarbeitungseinrichtung 12 ist darüber hinaus ausgebildet, um in Abhängigkeit mindestens eines Fahrparameters einen oder mehrere zukünftig zu erwartende Ladezustände der Batterie 13 zu ermitteln. Als Fahrparameter wird vorzugsweise die aktuelle Leistung des Fahrmotors 15 herangezogen. Jedoch kann als Fahrparameter auch die aktuelle Gesamtleistung des Elektrofahrzeuges 19 herangezogen werden, in der neben der Leistung des Fahrmotors 15 auch die Leistungen anderer Verbraucher berücksichtigt sind. Die Verarbeitungseinrichtung 12 ist in diesem Fall derart konfiguriert, dass sie über die Datenleitungen zu den einzelnen Komponenten den entsprechenden Fahrparameter selbstständig ermittelt. Der Fahrparameter kann dabei auch ein über einen bestimmten Zeitraum gemittelter Wert sein, um kurzzeitige Spitzenwerte abzufangen.

Die Verarbeitungseinrichtung 12 berechnet nun ausgehend von diesem Fahrparameter und gegebenenfalls weiteren Fahrparametern für mehrere Zeitpunkte in der Zukunft den zu erwartenden Ladezustand der Batterie. Hier wird davon ausgegangen, dass der zur Berechnung herangezogene Fahrparameter bis zu dem bzw. den zukünftigen Zeitpunkt(en) zumindest im Wesentlichen konstant bleibt. Als Berechnungspunkte können ein oder mehrere Zeit- oder Distanzintervalle dienen. Entsprechend der Erfindung werden nun neben dem aktuellen Ladezustand der Batterie auch die zukünftig zu erwartenden Ladezustände der Batterie auf dem Anzeigefeld 3 sichtbar gemacht. Die Verarbeitungseinrichtung 12 ist dazu konfiguriert bzw. programmiert, dass sie die erfindungsgemäße Lage und Ausdehnung der Anzeigeelemente 1 und 2 auf dem Anzeigefeld 3 in Abhängigkeit von den ermittelten (aktuellen und zukünftigen) Ladezuständen in Form von Koordinaten auf dem Anzeigefeld umwandelt bzw. bereitstellt.

Um dies zu erreichen, sind die Verarbeitungseinrichtung 12 und das Anzeigefeld 3 derart konfiguriert und steuert die Verarbeitungseinrichtung 12 das Anzeigefeld 3 derart an, dass das zweite graphische Anzeigeelement 2 jene Position, Ausrichtung, Form oder Größe des ersten graphischen Anzeigeelementes 1, die dem zukünftigen Ladezustand der Batterie 13 entspricht, anzeigt oder zumindest andeutet.

Beim Beispiel der Fig. 2 verschiebt sich das rechte Ende des ersten Anzeigeelementes 1 mit zunehmendem Ladezustand der Batterie 13 nach rechts und mit abnehmendem Ladezustand nach links. Das linke Ende des ersten Anzeigeelementes 1 bleibt fix bei der 0%-Marke und verändert seine Position nicht.

Das zweite Anzeigeelement 2 weist ebenfalls die Form eines Balkens auf, der entlang seiner Länge durch Markierungen in Form von vertikalen Strichen 20 unterteilt ist. Die vertikalen Striche 20 deuten zukünftige Ladezustände der Batterie 13 nach bestimmten, vordefinierten Zeit- oder Distanzintervallen an. Im dargestellten Ausführungsbeispiel entspricht ein durchgezogener vertikaler Strich 20 einem Zeitintervall von einer Stunde. Die einzelne strichlierte Markierung kann ein kürzeres Zeitintervall (z.B. 20 min) angeben. Alternativ können die Markierungen mit vordefinierten Distanzen korrelieren, z.B. entspricht dann ein Strich einer Distanz von 100 km, usw.. Es ist auch denkbar, dass beide Berechnungen, also zukünftige Ladezustände sowohl in Form von Zeitmarkierungen als auch in Form von Distanzmarkierungen, gleichzeitig anzeigbar sind oder der Fahrer zwischen diesen Möglichkeiten umschalten kann.

Aus einer Anzeige gemäß Fig. 2 ist nun ohne Anstrengung herauszulesen, dass bei der aktuellen Fahrleistung noch etwas mehr als vier Stunden gefahren werden können, bevor die Batterie 13 vollständig entladen ist. Gleichzeitig ist ersichtlich wie der Ladezustand der Batterie in einer, zwei, drei und vier Stunden aussehen wird.

Ein Ende des zweiten Anzeigeelementes 2 fällt mit dem rechten Ende, also dem in seiner Position veränderlichen Ende des ersten Anzeigeelementes 1 zusammen. Dieser geometrische Bezug gilt auch dann, wenn sich die Länge des ersten Anzeigeelementes 1 und/oder zweiten Anzeigeelementes 2 verändert. Anders ausgedrückt ist das in Abhängigkeit vom Ladezustand veränderliche Ende bzw. sind die veränderlichen Randkoordinaten des ersten Anzeigeelementes 1 Bezugspunkt für die Position des zweiten Anzeigeelements 2.

Damit beide Anzeigeelemente 1, 2 sichtbar sind, können sie sich in Form, Farbe, Struktur, etc. unterscheiden. Z.B. könnte der Balken 1 vollflächig grüne Farbe aufweisen, während das zweite Anzeigeelement 2 lediglich aus einer roten, rechteckigen Umrandung und den vertikalen Strichen besteht. In den Flächen dazwischen leuchtet der grüne Balken hindurch. Alle anderen Form- und Farbkombinationen sind denkbar.

Damit der Fahrer sogleich einen Bezug zwischen den dargebotenen Informationen erkennen kann, sind die Verarbeitungseinrichtung 12 und das Anzeigefeld 3 derart konfiguriert, dass die beiden Anzeigeelemente 1, 2 zeitgleich anzeigbar sind. Um zusätzlich Platz zu sparen, überlappen die Anzeigebereiche der jeweiligen Anzeigeelemente 1, 2 in Fig. 2 miteinander, was wiederum als besonderen Nebeneffekt das intuitive Erfassen der Information durch den Fahrer fördert.

In den Fig. 2 bis 5 sind immer dieselben Ladezustände dargestellt, d.h. die Länge des ersten Anzeigeelementes 1 ist in allen diesen Figuren konstant. Der Unterschied zwischen den einzelnen Figuren besteht darin, dass das zweite Anzeigeelement 2 in seiner Größe variiert. Dieses Szenario tritt ein, wenn der Fahrer sukzessive Druck vom Gaspedal nimmt, wodurch sich die aktuelle Fahrleistung und somit die Entladung der Batterie verringert. Entsprechend länger kann mit der Batterie noch gefahren werden. In der Anzeige ist dies dadurch ersichtlich, dass das zweite Anzeigeelement 2 nach rechts zusammengestaucht wird.

Figur 5 zeigt, dass es in bestimmten Situationen auch vorkommen kann, dass das zweite Anzeigeelement 2 sich rechterhand des ersten Anzeigeelementes 1 erstreckt. Eine derartige Situation tritt ein, wenn die aktuelle Leistung des Elektrofahrzeuges 19 geringer ist als die der Batterie 13 zugeführte Leistung. Dies kann durch das Zuschalten eines Range Extenders 14 oder durch das Anschließen eines Ladegerätes 21 an eine externe Stromversorgung eintreten.

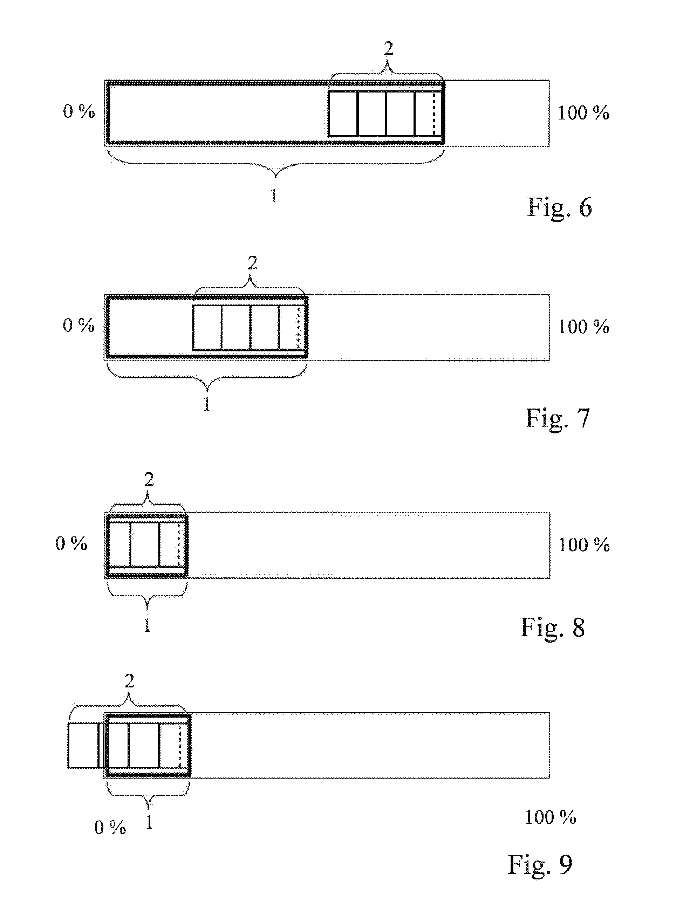

Die Figuren 6 bis 9 zeigen das Anzeigefeld 3 mit den grafischen Anzeigeelementen 1 und 2 bei jeweils unterschiedlichen Ladezuständen der Batterie 13. Hier geht besonders deutlich hervor, dass die Position des zweiten Anzeigeelementes 2 vom veränderlichen Ende des ersten Anzeigeelement 1 abhängt.

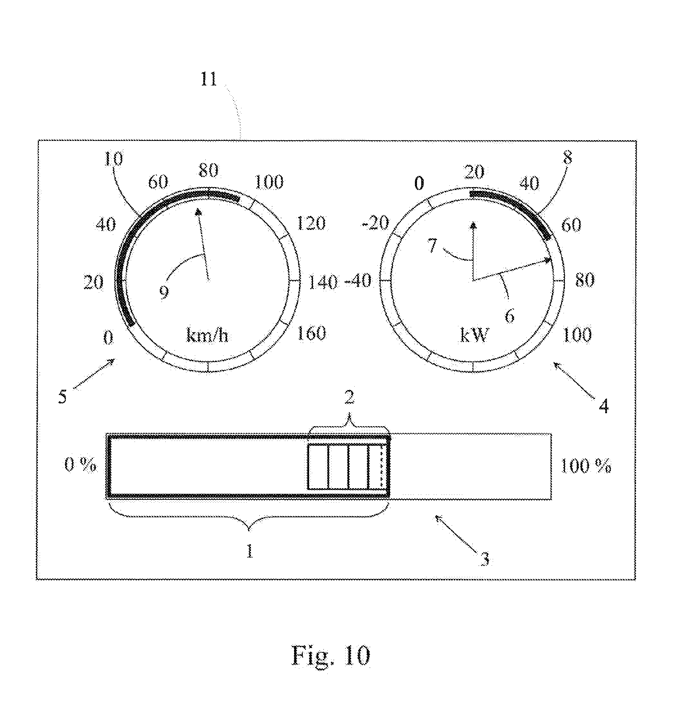

Die Figur 9 entspricht dem selben Fahrzeugstatus wie jenem aus Figur 8, jedoch wird hier alternativ das zweite grafische Anzeigeelement 2 über den linken Rand des ersten grafischen Anzeigeelementes 1 hinaus fortgeführt. Abschließend zeigt Figur 10 eine bevorzugte Ausführungsform, bei der auf einem Bildschirm bzw. Display 11 mehrere Anzeigefelder 3, 4, 5 untergebracht sind. Das zuunterst angeordnete Anzeigefeld 3 wurde bereits eingehend beschrieben. Das rechts oben angeordnete kreisförmige Anzeigefeld 4 weist als Skalierung entlang eines Kreisumfanges die Leistung in kW an. Der längere Pfeil 6 entspricht dabei der aktuellen Leistung des Fahrmotors 15. Der kleinere Pfeil 7 zeigt die aktuelle Leistung des Range Extenders 14 an, die dieser der Batterie einspeist. Die bogenförmige Bereichsmarkierung 8 zeigt jenen Leistungsbereich an, bei dessen Überschreiten durch den Pfeil 6 der Range Extender 14 dazu geschaltet wird, und bei dessen Unterschreiten der Range Extender 14 wieder ausgeschaltet wird. Die Bereichsmarkierung 8, deren Ausdehnung sich in Abhängigkeit vom Ladezustand der Batterie 13 ändert (bei hohem Ladezustand ist die Bereichsmarkierung größer und weiter im Uhrzeigersinn verschoben, bei geringem Ladezustand ist die Bereichsmarkierung kleiner und weiter gegen den Uhrzeigersinn verschoben), bietet dem Fahrer einen leicht und intuitiv zu erfassenden Anhaltspunkt, in welchem Bereich sich die aktuelle Leistung des Fahrmotors bewegen muss, um das Dazuschalten des Range Extenders zu vermeiden und somit möglichst energieeffizient zu fahren.

Das links oben dargestellte kreisförmige Anzeigefeld 5 beinhaltet eine Geschwindigkeitsanzeige in Form eines um einen Mittelpunkt drehbaren Pfeiles 9. Die bogenförmige Bereichsmarkierung 10 zeigt den Ladezustand der Batterie 13 an. Sie vergrößert sich im Uhrzeigersinn, wenn der Ladezustand der Batterie zunimmt, und verkleinert sich gegen Uhrzeigersinn, wenn der Ladezustand der Batterie abnimmt. Die Anzeige der Geschwindigkeit und des Ladezustandes der Batterie in einem gemeinsamen Anzeigefeld 5 erleichtert es dem Lenker seine Geschwindigkeit entsprechend angepasst zu wählen. Insbesondere kann er nicht dazu verleitet werden, bei minimalster Ladezustandsanzeige mit hoher Geschwindigkeit zu fahren.

Die vorliegende Erfindung ist nicht auf das dargestellte Ausführungsbeispiel beschränkt, sondern beinhaltet auch Varianten, bei denen die Ausgestaltung der grafischen Anzeigeelemente anders ist. Anstelle eines länglichen Balkens können die Anzeigeelemente auch in Form von Kreissegmenten ausgebildet sein, die sich im Uhrzeigersinn oder gegen den Uhrzeigersinn vergrößern beziehungsweise verkleinern. Denkbar sind auch Viellecke, die sich entlang einer Raumrichtung vergrößern oder verzerren, wobei z.B. ein Eckpunkt oder eine Seite des ersten Anzeigeelementes und ein Eckpunkt oder eine Seite des zweiten Anzeigeelementes zusammenfallen. An Form, Farbe, Größe sind keine Beschränkungen gestellt.

In einer ebenfalls denkbaren Variante besteht zumindest eines der grafischen Anzeigeelemente aus mehreren aneinander gereihten Teilelementen, wobei eine Änderung der Anzahl der Teilelemente zu einer Vergrößerung oder Verkleinerung des grafischen Anzeigeelementes führt.

In einer alternativen Variante stellt die Verarbeitungseinheit ihre Berechnungen nicht anhand eines gemessenen Fahrparameters an, sondern anhand eines vom Fahrer eingegebenen Fahrparameters. Dieser kann beispielsweise aus einem gespeicherten Pool von verschiedenen Fahrprofilen wählen. Beispiele dafür wären: "Fahrt mit 100 km/h in der Ebene", "Fahrt mit 40 km/h steil bergauf", "Fahrt mit 80 km/h leicht bergab", usw.. Jedem Fahrprofil sind dann in der Verarbeitungseinrichtung entsprechende gemittelte Datenwerte oder Listen zugeordnet, die eine Berechnung des zukünftigen Batteriestatus ermöglichen.

### Bezugszeichenliste

- 1 ―: erstes graphisches Anzeigeelement
- 2 ―: zweites graphisches Anzeigeelement
- 3 ―: Anzeigefeld
- 4 ―: Anzeigefeld
- 5 ―: Anzeigefeld
- 6 ―: graphisches Anzeigeelement
- 7 ―: graphisches Anzeigeelement
- 8 ―: graphisches Anzeigeelement
- 9 ―: graphisches Anzeigeelement
- 10 ―: graphisches Anzeigeelement
- 11 ―: Display
- 12 ―: Verarbeitungseinrichtung
- 13 ―: Batterie
- 14 ―: Range Extender
- 15 ―: Elektromotor
- 16 ―: Heizung
- 17 ―: Licht
- 18 ―: Radio
- 19 ―: Elektrofahrzeug
- 20 ―: Strich
- 21 ―: Ladegerät
- 22 ―: Anzeigevorrichtung

## Patentansprüche

1. Anzeigevorrichtung für ein mit einer Batterie (13) betriebenes Elektrofahrzeug (19) zur visuellen Darstellung des Ladezustandes der Batterie (13), umfassend:
- ein Anzeigefeld (3) für den Fahrzeuglenker, und
- eine mit dem Anzeigefeld (3) verbundene Verarbeitungseinrichtung (12) zur Ansteuerung des Anzeigefeldes (3),
wobei die Verarbeitungseinrichtung (2) ausgebildet ist, um den aktuellen Ladezustand der Batterie (13) zu ermitteln und dem Anzeigefeld (3) zur visuellen Darstellung bereitzustellen,
wobei der aktuelle Ladezustand der Batterie (13) auf dem Anzeigefeld (3) durch ein erstes graphisches Anzeigeelement (1) darstellbar ist und eine Änderung der Position, Ausrichtung, Form oder Größe des ersten graphischen Anzeigeelementes (1) mit einer Änderung des Ladezustandes der Batterie (13) korreliert, **dadurch gekennzeichnet, dass** die Verarbeitungseinrichtung (12) ausgebildet ist, um in Abhängigkeit mindestens eines Fahrparameters, insbesondere der aktuellen Leistung des Elektrofahrzeuges (19) oder eines vom Fahrzeuglenker eingegebenen Fahrprofils, mindestens einen, zukünftig zu erwartenden Ladezustand der Batterie (13), insbesondere nach einem oder mehreren Zeit- oder Distanzintervallen, zu ermitteln und dem Anzeigefeld (3) zur visuellen Darstellung bereitzustellen, und dass der zukünftige Ladezustand der Batterie (13) auf dem Anzeigefeld (3) als zweites graphisches Element (2) darstellbar ist, wobei die Positions-, Ausrichtungs-, Form- oder Größenkoordinaten des ersten graphischen Elementes (1) und des zweiten graphischen Elementes (2) auf dem Anzeigefeld (3) derart relativ zueinander festgelegt sind, dass das zweite graphische Element (2) jene Position, Ausrichtung, Form oder Größe des ersten graphischen Elementes (1), die dem zukünftigen Ladezustand der Batterie (13) entspricht, anzeigt oder zumindest andeutet.

2. Anzeigevorrichtung nach Anspruch 1, **dadurch gekennzeichnet, dass** die Verarbeitungseinrichtung (12) ausgebildet ist, um mehrere zukünftig zu erwartende Ladezustände der Batterie (13) nach verschiedenen, vorzugsweise äquidistanten Zeit- oder Distanzintervallen zu ermitteln und dem Anzeigefeld (3) zur visuellen Darstellung bereitzustellen, wobei das zweite graphische Anzeigeelement (2) jene Positionen, Formen oder Größen des ersten graphischen Elementes (1), die den zukünftigen Ladezuständen der Batterie (13) entsprechen, gleichzeitig anzeigt oder zumindest andeutet.

3. Anzeigevorrichtung nach einem der vorhergehenden Ansprüche, **dadurch gekennzeichnet, dass** das erste graphische Anzeigeelement (1) und das zweite graphische Anzeigeelement (2) auf dem Anzeigefeld (3) gleichzeitig darstellbar sind.

4. Anzeigevorrichtung nach einem der vorhergehenden Ansprüche, **dadurch gekennzeichnet, dass** die Verarbeitungseinrichtung (12) und das Anzeigefeld (3) derart ausgebildet sind, dass die bei einer Änderung des Ladezustandes der Batterie (13) veränderlichen Koordinaten des ersten graphischen Anzeigeelementes (1) auf dem Anzeigefeld (3) bei jedem Ladezustand der Batterie (13) als Bezugspunkt für die Position bzw. Ausrichtung des zweiten graphischen Anzeigeelementes (2) auf dem Anzeigefeld (3) dienen.

5. Anzeigevorrichtung nach einem der vorhergehenden Ansprüche, **dadurch gekennzeichnet, dass** die bei einer Änderung des Ladezustandes der Batterie (13) veränderlichen Randkoordinaten des ersten graphischen Anzeigeelementes (1) mit den Randkoordinaten des zweiten graphischen Anzeigeelementes (2) zusammenfallen.

6. Anzeigevorrichtung nach einem der vorhergehenden Ansprüche, **dadurch gekennzeichnet, dass** die Verarbeitungseinrichtung (12) das Anzeigefeld (3) derart ansteuert, dass das erste graphische Anzeigeelement (1) und das zweite graphische Anzeigeelement (2) und/oder der Anzeigebereich des ersten Anzeigeelementes (1) und der Anzeigebereich des zweiten Anzeigeelementes (2) auf dem Anzeigefeld (3) zumindest teilweise überlappen.

7. Anzeigevorrichtung nach einem der vorhergehenden Ansprüche, d**adurch gekennzeichnet, dass** zumindest eines der graphischen Anzeigeelemente (1, 2) ein in seiner Länge veränderlicher Balken ist, oder dass zumindest ein graphisches Anzeigeelement (1, 2) als Kreissegment oder als um einen Bezugspunkt drehbarer Pfeil ausgebildet ist, oder dass zumindest ein graphisches Anzeigeelement (1, 2) aus einer Aneinanderreihung mehrerer Teilelemente besteht.

8. Anzeigevorrichtung nach einem der vorhergehenden Ansprüche, **dadurch gekennzeichnet, dass** das zweite graphische Anzeigeelement (2) ein aus mehreren Strichen (20) oder Pfeilen bestehendes Muster ist, wobei die Striche (20) oder Pfeile die Positionen, Ausrichtungen, Formen oder Größen des ersten graphischen Anzeigeelementes (1), die den zukünftigen Ladezuständen der Batterie (13) entsprechen, anzeigen oder zumindest andeuten.

9. Anzeigevorrichtung nach einem der vorhergehenden Ansprüche, d**adurch gekennzeichnet, dass** die Verarbeitungseinrichtung (12) ausgebildet ist, um die aktuelle Leistung eines gegebenenfalls zugeschalteten Range Extenders (14) des Elektrofahrzeuges (19) zu ermitteln und bei der Ermittlung des zukünftig zu erwartenden Ladezustandes der Batterie (13) miteinzubeziehen.

10. Anzeigevorrichtung nach einem der vorhergehenden Ansprüche, **dadurch gekennzeichnet, dass** die Verarbeitungseinrichtung (12) ausgebildet ist, um die aktuelle Lade-Leistung eines gegebenenfalls angeschlossenen Ladegerätes (21) zu ermitteln und bei der Ermittlung des zukünftig zu erwartenden Ladezustandes der Batterie (13) miteinzubeziehen.

11. Anzeigevorrichtung nach einem der vorhergehenden Ansprüche, **dadurch gekennzeichnet, dass** die Verarbeitungseinrichtung (12) ausgebildet ist, um die aktuelle Leistung eines gegebenenfalls zugeschalteten Range Extenders (14) des Elektrofahrzeuges (19) und die aktuelle Leistung des Elektrofahrzeuges (19) einem Anzeigefeld (4) zur visuellen Darstellung bereitzustellen, wobei die derart ermittelten Leistungen auf dem Anzeigefeld (4) durch weitere graphische Anzeigeelemente (6, 7) darstellbar sind, die vorzugsweise derselben Skalierung unterliegen.

12. Anzeigevorrichtung nach Anspruch 11, **dadurch gekennzeichnet, dass** die Verarbeitungseinrichtung (12) ausgebildet ist, um in Abhängigkeit des Ladezustandes der Batterie (13) einen Leistungsbereich des Elektrofahrzeuges (19) zu ermitteln, in dem der Range Extender (14) nicht zugeschaltet wird, und dem Anzeigefeld (4) zur visuellen Darstellung zu übermitteln, wobei der Leistungsbereich auf dem Anzeigefeld (4) durch ein graphisches Anzeigeelement (8) darstellbar ist, das derselben Skalierung unterliegt wie die graphischen Anzeigeelemente (6, 7), die die Leistungen des Range Extenders (14) und des Elektrofahrzeuges (19) darstellen.

13. Anzeigevorrichtung nach einem der vorangegangenen Ansprüche, **dadurch gekennzeichnet, dass** die Verarbeitungseinrichtung (12) ausgebildet ist, um die aktuelle Geschwindigkeit des Elektrofahrzeuges (19) und den aktuellen Ladezustand der Batterie (13) in einem gemeinsamen Anzeigefeld (5) zur visuellen Darstellung bereitzustellen, und dass das Anzeigefeld (5) derart konfiguriert ist, dass sich ein graphisches Anzeigeelement (9) für die Geschwindigkeit und ein graphisches Anzeigeelement (10) für den Ladezustand der Batterie (13) entlang derselben Skalierung ändern.

14. Elektrofahrzeug (19) mit einer Batterie (13) und gegebenenfalls mit einem Range Extender (14) zum Aufladen der Batterie (13) während der Fahrt und mit einer Anzeigevorrichtung (22) zur visuellen Darstellung des Ladezustandes der Batterie (13), **dadurch gekennzeichnet, dass** die Anzeigevorrichtung (22) nach einem der vorangegangenen Ansprüche ausgebildet ist.

15. Verfahren zum Betrieb einer Anzeigevorrichtung (22) in einem mit einer Batterie (13) betriebenen Elektrofahrzeug (19) zur visuellen Darstellung des Ladezustandes der Batterie (13), wobei die Anzeigevorrichtung (22)
- ein Anzeigefeld (3) für den Fahrzeuglenker und
- eine mit dem Anzeigefeld (3) verbundene Verarbeitungseinrichtung (12) zur Ansteuerung des Anzeigefeldes (3) umfasst,
wobei die Verarbeitungseinrichtung (12) den aktuellen Ladezustand der Batterie (13) ermittelt und dem Anzeigefeld (3) zur visuellen Darstellung bereitstellt,
wobei der aktuelle Ladezustand der Batterie (13) auf dem Anzeigefeld (3) durch ein erstes graphisches Anzeigeelement (1) dargestellt wird und eine Änderung der Position, Ausrichtung, Form oder Größe des ersten graphischen Anzeigeelementes (2) mit einer Änderung des Ladezustandes der Batterie (13) korreliert, **dadurch gekennzeichnet, dass** die Verarbeitungseinrichtung (12) in Abhängigkeit mindestens eines Fahrparameters, insbesondere der aktuellen Leistung des Elektrofahrzeuges (19) oder eines vom Fahrzeuglenker eingegebenen Fahrprofils, mindestens einen, zukünftig zu erwartenden Ladezustand der Batterie (13), insbesondere nach einem oder mehreren Zeit- oder Distanzintervallen, ermittelt und dem Anzeigefeld (3) zur visuellen Darstellung bereitstellt, und dass der zukünftige Ladezustand der Batterie (13) auf dem Anzeigefeld (3) als zweites graphisches Element (2) dargestellt wird, wobei die Positions-, Ausrichtungs-, Form- oder Größenkoordinaten des ersten graphischen Elementes (1) und des zweiten graphischen Elementes (2) auf dem Anzeigefeld (3) derart relativ zueinander festgelegt werden, dass das zweite graphische Element (2) jene Position, Ausrichtung, Form oder Größe des ersten graphischen Elementes (1), die dem zukünftigen Ladezustand der Batterie (13) entspricht, anzeigt oder zumindest andeutet.
